# EUROPÄISCHE PATENTSCHRIFT

(11) **EP 3 167 219 B1**
(45) Veröffentlichungstag und Bekanntmachung des Hinweises auf die Patenterteilung: **22.08.2018**
(21) Anmeldenummer: 15733411.1
(22) Anmeldetag: 25.06.2015
(51) Int. Cl.: F16L 19/065

(54) **ANSCHLUSSTEIL**
CONNECTING PART
PIÈCE DE RACCORDEMENT

(30) Priorität: 07.07.2014 AT 5442014
(43) Veröffentlichungstag der Anmeldung: 17.05.2017
(73) Patentinhaber: E. Hawle Armaturenwerke GmbH, 4840 Vöcklabruck (AT)
(72) Erfinder: JODLBAUER, Johann, A-4844 Regau (AT)
(74) Vertreter: Puchberger & Partner Patentanwälte
(86) Internationale Anmeldenummer: PCT/EP2015/064388
(87) Internationale Veröffentlichungsnummer: WO 2016/005195

(56) Entgegenhaltungen:
- EP-A1- 1 605 195
- DE-A1-102005 060 371
- FR-A- 1 335 121

## Beschreibung

Die Erfindung betrifft einen Anschlussteil für eine Rohrleitung, umfassend ein Gehäuse mit zumindest einer Einschuböffnung zum Einführen zumindest eines Rohres und zumindest ein Spannelement, wobei im Spannelement zur Fixierung des Rohres in der Einschuböffnung eine mit einer konischen Betätigungsfläche des Spannelements zusammenwirkende Zugsicherung vorgesehen ist, und wobei im Gehäuse zur Abdichtung des Anschlussteils eine ringförmige, mit einem Trägerring und Druckbacken versehene und mit einer Anschlagfläche des Spannelements zusammenwirkende Druckhülse vorgesehen ist. Die konische Betätigungsfläche ist von der Anschlagfläche getrennt ausgeführt, sodass die Zugsicherung und die Druckhülse unabhängig voneinander betätigbar sind.

Derartige Anschlussteile sind als Zubehörteile, insbesondere als Armaturen, Fittinge und Verbindungsstücke für Rohrleitungen weit verbreitet. Die Zugsicherung wird beim Befestigen des Spannelements über deren konische Betätigungsfläche zusammengedrückt, presst gegen die eingeführte Rohrleitung und wirkt somit einem Ausziehen der Rohrleitung entgegen.

Beispielsweise offenbart die französische Patentanmeldung FR 1 335 121 A ein gattungsgemäßes Anschlussteil für eine Rohrleitung umfassend ein Gehäuse mit Einschuböffnung, sowie ein Spannelement. Weitere gattungsgemäße Anschlussteile für Rohrleitungen sind beispielsweise aus der EP 1 605 195 A1 oder der DE 10 2005 060371 A1 bekannt.

Ein Problem derartiger gattungsgemäßer Anschlussteile besteht darin, dass eine sichere und robuste Abdichtung des eingeführten Rohres nicht erreicht werden kann. Zwar ist es bekannt, zur Abdichtung des eingeführten Rohres im Spannelement einen O-Ring vorzusehen und diesen beim Montieren des Spannelements gegen die Rohrleitung zu pressen. Dabei kommt es aber zwangsläufig zur ungewünschten Interaktion mit der Zugsicherung, die ebenfalls beim Montieren des Spannelements betätigt wird.

Die Aufgabe der Erfindung besteht somit unter anderem darin, ein Anschlussteil zu schaffen, das leicht und robust montierbar ist und es insbesondere ermöglicht, eine gute Abdichtung der Rohrleitung gegenüber dem Über- oder Unterdruck des transportierten Mediums, und gleichzeitig eine gute Zugfestigkeit gegenüber mechanischen Belastungen zu erreichen, wobei aber eine definierte Positionierung der Druckhülse im Gehäuse ermöglicht werden soll.

Diese und andere Aufgaben werden erfindungsgemäß dadurch gelöst, dass im Gehäuse eine Dichtkammer zur Aufnahme der Druckhülse vorgesehen ist, die einen gegenüber der Einschuböffnung erweiterten Durchmesser aufweist und einen Dichtanschlag umfasst. Dadurch ist die Druckhülse zwischen der Anschlagfläche des Spannelements und dem Dichtanschlag einspannbar. Weiters befinden sich im Bereich der Dichtkammer am inneren Umfang des Gehäuses Versteifungsrippen und Positioniertaschen. Diese wirken einerseits mit den Druckbacken der Druckhülse derart zusammen, damit eine korrekte Positionierung der Druckhülse in der Dichtkammer erreicht wird, andererseits bilden sie einen Anschlag für die Zugsicherung und dienen als Drehmomentaufnahme für zusätzliche Bauteile.

Im Gehäuse ist zur Abdichtung des Anschlussteils eine ringförmige, mit einem Trägerring und Druckbacken versehene und mit einer Anschlagfläche des Spannelements zusammenwirkende Druckhülse vorgesehen, wobei die konische Betätigungsfläche und die Anschlagfläche getrennt voneinander ausgeführt ist, sodass die Zugsicherung und die Druckhülse unabhängig voneinander betätigbar sind. Die Anschlagfläche des Spannelements kann vorzugsweise umlaufend oder umlaufend segmentiert ausgeführt sein.

Durch diese konstruktive Ausführung des Anschlussteils wird erreicht, dass das Zusammenpressen der Zugsicherung funktional von der Abdichtung der Rohrleitung getrennt wird. Die Zugsicherung wird dadurch zusammengepresst, dass die konische Betätigungsfläche bei der Montage (dem Aktivieren) des Spannelements transversal, also normal auf die Flussrichtung des Mediums bzw. die Einschubrichtung des Rohres, gegen die Zugsicherung drückt. Hingegen wird die Rohrleitung abgedichtet, indem die Anschlagfläche des Spannelements lateral, also in Flussrichtung des Mediums, gegen die Druckhülse drückt, und diese in lateraler Richtung verschiebt. Der Begriff "Aktivieren" bezeichnet das Fixieren des Spannelements am Gehäuse, beispielsweise, aber nicht ausschließlich, durch Verschrauben.

Indem die konische Betätigungsfläche und die Anschlagfläche voneinander getrennt ausgeführt sind, ist sichergestellt, dass die Zugsicherung und die Abdichtung der Rohrleitung voneinander unabhängig einstellbar sind. Dadurch kann auf spezifische Anforderungen reagiert werden, beispielsweise hohe Druckbelastung durch das Medium und geringe mechanische Zugbelastung von außen, oder umgekehrt.

Bei dem Anschlussteil kann es sich insbesondere um ein Anschlussteil zur Verbindung zweier Rohre wie ein Fitting, aber auch um eine Anschlussarmatur wie einen Schieber oder dergleichen handeln.

Durch den erweiterten Durchmesser im Bereich der Dichtkammer wird verhindert, dass die Druckhülse beim Betätigen des Spannelements mit der Zugsicherung in Kontakt kommen kann.

Die Druckhülse verbleibt im Wesentlichen vollständig innerhalb der Dichtkammer und erstreckt sich nicht in einen Bereich, der einer lateralen Vorschubbewegung der Zugsicherung im Weg stehen würde.

Erfindungsgemäß kann weiters vorgesehen sein, dass zwischen der Druckhülse und dem Dichtanschlag eine, vorzugsweise in einer Rundnut der Druckhülse oder in einem anders geformten Profil angeordnete Pressdichtung angeordnet ist. Dies erlaubt auf einfache Weise die effektive Abdichtung der Rohrleitung, da die Druckhülse von der Anschlagfläche des Spannelements gegen den Dichtanschlag gepresst wird, und dabei die Pressdichtung zusammenpresst. Diese erweitert sich und presst ihrerseits gegen die Rohrleitung, wodurch die effektive Abdichtung gegen den Innendruck des Mediums erreicht wird.

Erfindungsgemäß ist vorgesehen, dass im Bereich der Dichtkammer am inneren Umfang des Gehäuses Versteifungsrippen und Positioniertaschen vorgesehen sind, die einerseits mit den Druckbacken der Druckhülse derart zusammenwirken, dass eine korrekte, vorzugsweise formschlüssige, Positionierung der Druckhülse in der Dichtkammer erreicht wird. Andererseits können die Versteifungsrippen und Positioniertaschen auch einen Anschlag für die Zugsicherung bilden. Darüber hinaus können die Versteifungsrippen und Positioniertaschen auch in vorteilhafter Weise als Drehmomentaufnahme für zusätzliche Bauteile wirken.

Insbesondere kann erfindungsgemäß vorgesehen sein, dass das Gehäuse hohlzylinderförmig ausgeführt ist und zwei Einschuböffnungen zum Einführen zweier Rohre aufweist. Das Gehäuse kann aber auch als Endstück mit nur einer Öffnung, als T-Stück mit drei Öffnungen, als Bogen oder in anderen üblichen Fittingformen, oder als anderer Zubehörteil ausgeführt sein.

Erfindungsgemäß kann weiters vorgesehen sein, dass am inneren Umfang der Einschuböffnung des Gehäuses zumindest ein, vorzugsweise mit einer Sollbruchstelle versehener Rohranschlag vorgesehen ist. Der Rohranschlag kann mit dem Gehäuse fix verbunden, oder als zusätzliches Teil vorgesehen sein. Durch den Rohranschlag ist es dem Benutzer beim Einführen des Rohres möglich, zu erkennen, bis zu welchem Punkt das Rohr eingeführt werden muss. Die Position des Rohranschlags kann vorzugsweise am äußeren Umfang des Gehäuses durch Markierungen angedeutet sein.

Erfindungsgemäß kann weiters vorgesehen sein, dass das Gehäuse mit einem Außengewinde und das Spannelement als Spannmutter mit einem korrespondierenden Innengewinde, vorzugsweise in Form von Schraub- oder Bajonettgewinden, ausgeführt ist. Das Außengewinde des Gehäuses kann erfindungsgemäß als mehrgängiges Trapezgewinde mit einer flachen Flanke, insbesondere in einem Winkelbereich von 2° bis 20°, vorzugsweise 6°, ausgeführt sein.

Erfindungsgemäß kann weiters vorgesehen sein, dass am äußeren Umfang des Außengewindes des Gehäuses Klicklaschen vorgesehen sind, die mit Arretierungstaschen am inneren Umfang des Spannelements zusammenwirken. Dadurch wird erreicht, dass dem Benutzer beim Montieren (beim Aktivieren) des Spannelements eine Rückmeldung gegeben wird, bevor er das Spannelement zu stark montiert und damit möglicherweise das Gewinde beschädigt. Durch die Rückmeldung wird gewährleistet, dass die Dichtung und Sicherung aktiv sind. Das Öffnen (Aufschrauben oder Deaktivierung) des Fittings ist nur mit bestimmtem Kraftaufwand möglich. Unbeabsichtigtes deaktivieren ist dadurch nicht möglich.

Erfindungsgemäß kann weiters vorgesehen sein, dass sich bereits im Auslieferungszustand des Anschlussteils das Spannelement im Eingriff mit bestimmten Arretierungstaschen befindet. Dadurch wird einerseits erreicht, dass das Spannelement im Auslieferungszustand in Position gehalten wird, und andererseits, dass dem Benutzer angezeigt wird, dass das Anschlussteil noch nicht montiert (aktiviert) ist.

Es können zu diesem Zweck erfindungsgemäß unterschiedliche Arretierungstaschen für den Auslieferungszustand, und den montierten (aktivierten) Zustand vorgesehen sein.

Erfindungsgemäß kann weiters vorgesehen sein, dass am äußeren Umfang des Außengewindes des Gehäuses eine zumindest im Wesentlichen umlaufende, vorstehende Dichtschulter vorgesehen ist. Die Dichtschulter kann erfindungsgemäß mit einem äußeren Versteifungsring des Spannelements derart zusammenwirken, dass in angeschraubtem (aktiviertem oder montiertem) Zustand der Bereich zwischen Gehäuse und Spannelement abgedichtet ist.

Zwischen der Dichtschulter und dem Versteifungsring kann optional eine Staubdichtung angeordnet sein. Dadurch wird erreicht, dass der Gewindebereich im montierten Zustand gegenüber der Umgebung abgedichtet ist. Die Staubdichtung kann als O-Ring ausgeführt sein. Die Staubdichtung kann in einer Ausnehmung der Dichtschulter oder in einer Ausnehmung des Versteifungsrings angeordnet sein.

Erfindungsgemäß kann insbesondere vorgesehen sein, dass die Anschlagfläche des Spannelements direkt anschließend oder beabstandet von einem vorgesehenen Innengewinde angeordnet ist, und die konisch verlaufende Betätigungsfläche direkt anschließend oder beabstandet von dieser Anschlagfläche vorgesehen ist. Alternativ kann auch vorgesehen sein, dass die Anschlagfläche und die Betätigungsfläche beabstandet zueinander angeordnet sind.

Die Anschlagfläche und die Betätigungsfläche nehmen vorzugsweise zueinander einen Winkel größer als 90°, vorzugsweise 95° bis 110°, besonders bevorzugt 100° ein. Damit wird eine besonders effektive Trennung der transversalen Druckausübung über die konische Betätigungsfläche von der lateralen Druckausübung über die - beinahe rechtwinklig dazu angeordnete - Anschlagfläche erreicht. Erfindungsgemäß ist weiters vorgesehen, dass im Inneren des Spannelements ein sich konisch erweiternder, durch die Betätigungsflächen begrenzter Klemmraum zur Aufnahme der Zugsicherung vorgesehen ist.

Anschließend an die Betätigungsfläche kann erfindungsgemäß vorgesehen sein, dass ein äußerer Anschlag vorgesehen ist, der mit der Zugsicherung zusammenwirkt, sodass ein Austreten der Zugsicherung bei Betätigung des Spannelements verhindert wird, wobei der Anschlag gleichzeitig die maximale Eindringtiefe der Zugsicherung in das Rohr bestimmt. Weiters kann erfindungsgemäß vorgesehen sein, dass das Spannelement eine Durchlassöffnung aufweist, an deren innerem Umfang eine Schmutz- oder Staubdichtung vorgesehen ist.

Erfindungsgemäß kann auch vorgesehen sein, dass die axiale Ausdehnung der Klemme geringer ist als der für die Klemme zur Verfügung stehende Weg im Spannelement. Bei Aktivierung wird die Klemme leicht in das Rohr gedrückt. Erst durch eine Zugbelastung am Rohr wird die Klemme in Richtung der Anschlagfläche gezogen. Somit wirkt die Anschlagfläche in diesem Fall gegen das Entweichen der Klemme.

Erfindungsgemäß kann vorgesehen sein, dass die Zugsicherung als zusammendrückbarer, vorzugsweise unterbrochener Ring mit zumindest partiell konischer Außenfläche ausgeführt ist, dessen Innendurchmesser größer ist als der Innendurchmesser des Spannelements. Somit ist der Innendurchmesser der Zugsicherung auch größer als der Aussendurchmesser des Rohres. In diesem Fall wird die Zugsicherung als A-Klemme bezeichnet und vom Trägerring der Druckhülse bei Auslieferung und Beginn der Montage in ihrer Position fixiert. Das Rohr kann bei der Montage ohne Widerstand in das Gehäuse eingeführt werden. Erst bei Aktivierung des Fittings durch Anschrauben des Spannelements gibt der Trägerring die Zugsicherung frei, die Zugsicherung wird in Folge durch das Spannelement zusammengedrückt und greift am äußeren Umfang des Rohres an um dieses zu fixieren. Das Anschlussteil wirkt in diesem Fall als Aktivierungsfitting.

Erfindungsgemäß kann vorgesehen sein, dass die Zugsicherung als auseinanderdrückbarer, vorzugsweise unterbrochener Ring mit zumindest partiell konischer Außenfläche ausgeführt ist, dessen Innendurchmesser kleiner ist als der Innendurchmesser des Spannelements. Somit ist der Innendurchmesser der Zugsicherung auch kleiner als der Aussendurchmesser des Rohres.

In diesem Fall wird die Zugsicherung als S-Klemme bezeichnet und vom Trägerring der Druckhülse bei Auslieferung und Beginn der Montage in ihrer Position fixiert. Die Zugsicherung greift in diesem Fall schon beim Einführen des Rohres an dessen Außenumfang an, wobei die Zugsicherung durch das Rohr auseinandergedrückt und freigegeben wird.

Das Anschlussteil wirkt in diesem Fall als Steckfitting, sodass das Spannelement zur Fixierung des Rohres nicht betätigt werden muss.

Erfindungsgemäß kann vorgesehen sein, dass die Bauteile des Anschlussteils derart ausgeführt sind, dass die genannten Ausführungsformen der Zugsicherung austauschbar sind, sodass das Anschlussteil durch Austausch der Zugsicherung entweder als Steckfitting, oder als Aktivierungsfitting verwendet werden kann.

Erfindungsgemäß kann vorgesehen sein, dass am äußeren Umfang des Gehäuses ein Stift und am Spannelement eine Vertiefung vorgesehen ist, sodass beim Aktivieren des Spannelements der Stift in die Vertiefung einrastet, sodass die korrekte Position des Spannelements indiziert wird. Bei der Verwendung des Anschlussteils als Steckfitting kann vorgesehen sein, dass der Stift bereits im Auslieferungszustand eingerastet ist.

Der Stift und die Vertiefung können insbesondere derart ausgeführt sein, dass beim Aufschrauben des Spannelements der Stift wegbricht und somit anzeigt, ob das Fitting schon einmal demontiert wurde.

Weiters erstreckt sich die Erfindung auf eine Rohrleitung mit einem erfindungsgemäßen Anschlussteil. Weitere erfindungsgemäße Merkmale ergeben sich aus der Beschreibung der Ausführungsbeispiele, den Patentansprüchen und den Figuren.

Die Erfindung wird nun anhand von beispielhaften Ausführungsbeispielen näher erläutert, wobei der Umfang des Schutzbereiches nicht durch die Ausführungsbeispiele eingeschränkt ist.
Fig. 1a bis 1d zeigen eine schematische Darstellung eines Ausführungsbeispiels eines erfindungsgemäßen Anschlussteils;
Fig. 2a bis 2c zeigen eine schematische Darstellung eines Ausführungsbeispiels des Gehäuses eines erfindungsgemäßen Anschlussteils;
Fig. 3a bis 3c zeigen eine schematische Darstellung eines Ausführungsbeispiels eines erfindungsgemäßen Spannelements;
Fig. 3d zeigt ein Detail eines weiteren Ausführungsbeispiels der Erfindung;
Fig. 3e und 3f zeigen ein weiteres Detail einer alternativen Ausführungsform der Erfindung;
Fig. 4a bis 4d zeigen eine schematische Darstellung eines Ausführungsbeispiels einer erfindungsgemäßen Druckhülse;
Fig. 5a bis 5d zeigen eine schematische Darstellung eines weiteren Ausführungsbeispiels einer erfindungsgemäßen Druckhülse;
Fig. 6a und 6b zeigen einen schematischen Querschnitt durch eine Ausführungsform der Erfindung als Aktivierungsfitting;
Fig. 6c zeigt einen schematischen Querschnitt durch eine Ausführungsform der Erfindung als Steckfitting.

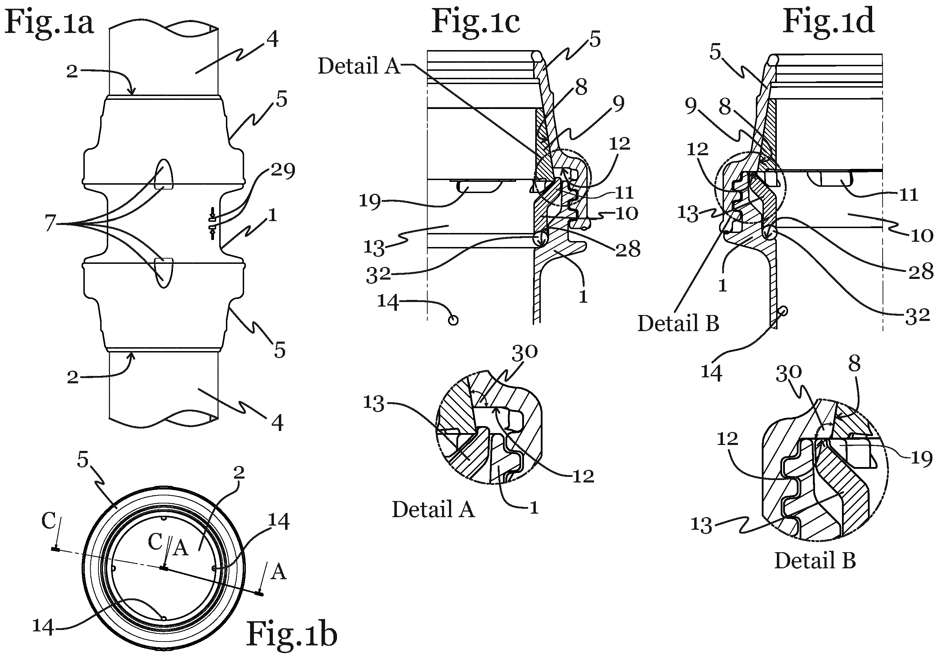

Fig. 1a zeigt eine schematische Darstellung eines Ausführungsbeispiels eines erfindungsgemäßen Anschlussteils. Das Anschlussteil ist als Rohrfitting ausgeführt und umfasst ein Gehäuse 1 mit zwei Einschuböffnungen 2, in die Rohrleitungen 4 eingeführt sind. Die Rohrleitungen 4 sind durch Spannelemente 5 befestigt, die als Spannmuttern ausgeführt sind, und es sind am äußeren Umfang des Gehäuses 1 Markierungen 29 vorgesehen, welche die vorgesehene Einschubtiefe der Rohre 4 für den Benutzer anzeigen. Weiters sind auf dem Spannelement 5 und dem Gehäuse 1 Aktivierungsmarkierungen 7 vorgesehen, welche bei gegenüberliegender Ausrichtung die korrekt aktivierte (verschraubte) Position des Spannelements 5 in Bezug auf das Gehäuse 1 anzeigen.

Fig. 1b zeigt eine Ansicht des Anschlussteils aus Fig. 1a von oben. Man sieht die Einschuböffnung 2 und das Spannelement 5 sowie das eingeschobene Rohr und die Rohranschläge 14, welche ein zu tiefes Einschieben des Rohres 4 verhindern. In Fig. 1b sind zwei in radialer Richtung verlaufende Schnitte angedeutet, der Schnitt A-A sowie der Schnitt C-C.

Fig. 1c zeigt eine schematische Darstellung des Anschlussteils entlang des Schnittes A-A im nicht fixierten Zustand. Das eingeschobene Rohr 4 wurde aus Übersichtsgründen nicht dargestellt. Das Gehäuse 1 verfügt in seinem Inneren über eine Druckhülse 13, die bei Betätigung des Spannelements 5 nach unten geschoben wird und gegen eine Pressdichtung 32 drückt, um eine gute Abdichtung des eingeschobenen Rohres zu erreichen. Zu diesem Zweck verfügt das Spannelement 5 über eine im Wesentlichen normal zur Flussrichtung des Mediums verlaufende Anschlagfläche 12, die mit der Oberkante der Druckhülse 13 zusammenwirkt. Die Pressdichtung 32 wird bei Betätigung des Spannelements 5 gegen den Dichtanschlag 28 des Gehäuses 1 gedrückt und erweitert sich. Im Wesentlichen unabhängig von der Druckhülse 13 ist im Inneren des Spannelements 5 eine ringförmige Zugsicherung 9 vorgesehen, die eine konische Außenfläche aufweist.

Durch Betätigung des Spannelements 5 trifft die konische Betätigungsfläche 8 des Spannelements 5 auf die konische Außenfläche der Zugsicherung 9 und drückt diese zusammen. Dies erfolgt unabhängig von der Betätigung der Druckhülse 13. Ebenfalls sichtbar sind Druckbacken 11 der Druckhülse 13 sowie der Trägerring 10. Das Detail A zeigt den kritischen Bereich zwischen Gehäuse 1, Spannelement 5, Druckhülse 13 und Zugsicherung 9 in dem unerwünschte Interaktionen durch die spezielle konstruktive Ausführung vermieden werden. Die Anschlagfläche 12 des Spannelements 5 ist anschließend an das Innengewinde des Spannelements 5 angeordnet und geht in einem Winkel 30 der etwa 105° beträgt über in die Betätigungsfläche 8. Beim Betätigen des Spannelements 5 drückt diese einerseits die Zugsicherung 9 zusammen, und andererseits über die Anschlagfläche 12 die Druckhülse 13 nach unten. Beide Bewegungen sind voneinander unabhängig.

Fig. 1d zeigt eine schematische Darstellung des Anschlussteils entlang des Schnittes C-C im montiertem Zustand. Das Spannelement 5 ist in dieser Darstellung vollständig auf das Gehäuse 1 aufgeschraubt, das Fitting ist aktiviert. Die Bezugszeichen haben die selbe Bedeutung wie in Fig. 1c. Das Detail B zeigt, dass im montierten Zustand die Zugsicherung 9 durch die Betätigungsfläche 8 nach innen gedrückt ist und die Zugsicherung 9 auf einer Versteifungsrippe 19 des Gehäuses 1 aufliegt.

Die Anschlagfläche 12 des Spannelements 5 schiebt die Druckhülse 13 zur Gänze nach unten, wodurch erreicht wird, dass die Pressdichtung 32 zusammen gepresst wird und ihre Form verändert. Dies ist in Fig. 1d aus Klarheitsgründen nicht dargestellt, in der Realität nimmt die Pressdichtung 32 einen ovalen Querschnitt an.

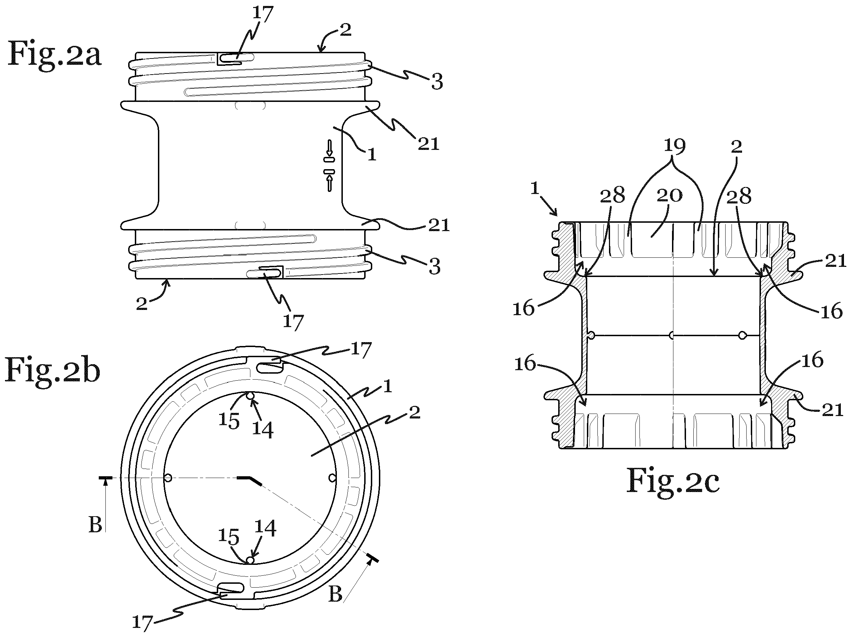

Fig. 2a zeigt eine Seitenansicht des Gehäuses 1 einer Ausführungsform des erfindungsgemäßen Anschlussteils. Das Gehäuse 1 verfügt über zwei Einschuböffnungen 2 sowie über zwei Außengewinde 3 zur Befestigung des Spannelements 5. Am oberem Umfang der Außengewinde 3 sind Klicklaschen 17 angeordnet. Weiters verfügt das Gehäuse 1 an beiden Enden über eine radial vorstehende Dichtschulter 21, die zur Abdichtung des Gehäuses gegen Umwelteinflüsse dient.

In Fig. 2b ist eine Ansicht des Gehäuses 1 von oben dargestellt. Es ist sichtbar, dass im Inneren des Gehäuses 1 Rohranschläge 14 mit Sollbruchstellen 15 angeordnet sind. Die Rohranschläge ermöglichen es dem Benutzer, festzustellen, bis zu welcher Tiefe das Rohr in die Einschuböffnung 2 eingeführt werden soll. Gegebenenfalls kann jedoch das Rohr durch Aufbringen zusätzlicher Kraft über die Rohranschläge 14 geschoben werden, indem die Sollbruchstellen durchtrennt werden. Diese Funktionalität ermöglicht auch die Verwendung des Anschlussteils als Überschubfitting zur Reparatur einer Rohrleitung. Fig. 2c zeigt einen gebrochenen Schnitt entlang der Schnittlinie B-B aus Fig. 2b. Das Gehäuse 1 verfügt im Bereich der Außengewinde 3 über Dichtkammern 16 zur Aufnahme der Druckhülse 13. Die Dichtkammern 16 sind mit Versteifungsrippen 19 und Positioniertaschen 20 versehen, um die korrekte Einführung der Druckhülse 13 zu ermöglichen.

Am unteren Ende der Dichtkammern 16 sind Dichtanschläge 28 vorgesehen, welche dazu dienen, die Pressdichtung 32 aufzunehmen. Weiters sind in dieser Abbildung die Dichtschultern 21 zu sehen.

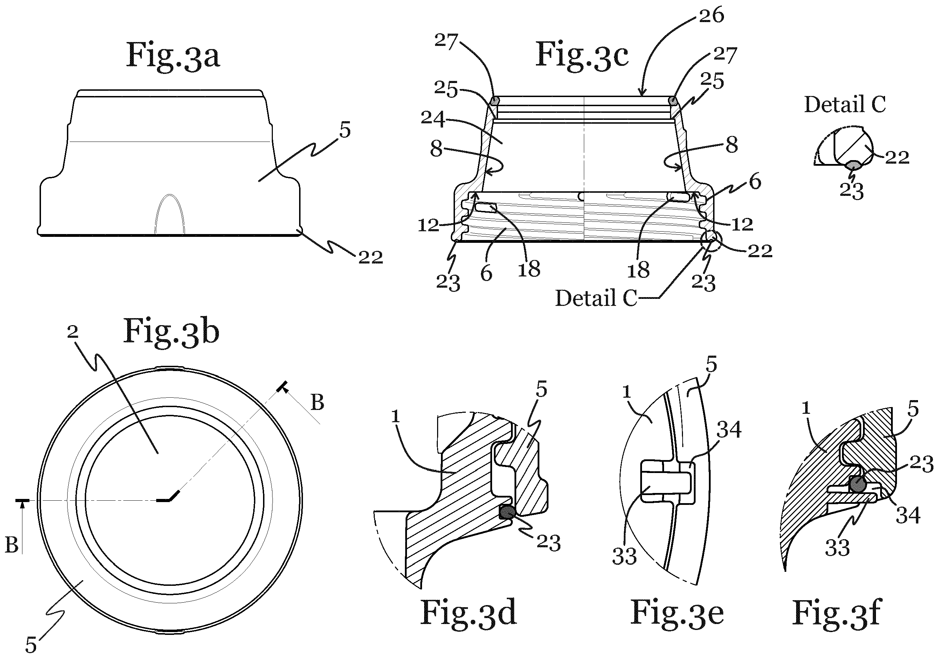

Fig. 3a bis 3c zeigen schematische Darstellungen des Spannelements 5 eines erfindungsgemäßen Anschlussteils. Das Spannelement 5 ist als Spannmutter mit einem Innengewinde ausgeführt und verfügt an seinem äußeren Umfang über einen Versteifungsring 22, der mit der Dichtschulter 21 des Gehäuses 1 zusammenwirkt. In Fig. 3b ist eine Ansicht von oben gezeigt.

Fig. 3c zeigt einen geteilten Schnitt entlang der Linie B-B aus Fig. 3b. Das Spannelement 5 verfügt über eine obere Durchlassöffnung 26, die an ihrem Umfang eine Staubdichtung 27 aufweist. Im Bereich der Durchlassöffnung 26 ist am inneren Umfang des Spannelements 5 ein Anschlag 25 vorgesehen, der als oberer Anschlag der Zugsicherung 9 dient. Im Inneren des Spannelements 5 ist ein Klemmraum 24 durch konische Betätigungsflächen 8 begrenzt. In diesem Klemmraum 24 wird die Zugsicherung 9 eingebracht. Die Betätigungsfläche 8 schließt an eine Anschlagfläche 12 an, wie dies im Zusammenhang mit Fig. 1c bis 1d bereits erläutert wurde.

Im Bereich des Innengewindes 6 des Spannelements 5 sind Arretierungstaschen 18 in Form von Ausnehmungen vorgesehen, die dazu dienen, mit den Klicklaschen 17 des Gehäuses 1 zusammenzuwirken. Dadurch wird erreicht, dass dem Benutzer bei Betätigung des Spannelements 5 das Ende des Gewindes bzw. das vollständige Aktivieren (Verschrauben) signalisiert wird. Durch die Rückmeldung wird gewährleistet, dass die Dichtung und Sicherung aktiviert sind. Die Deaktivierung (Lösung) des Fittings ist nur durch einen bestimmten Kraftaufwand möglich; unbeabsichtigtes Deaktivieren soll nicht möglich sein.

Das Innengewinde 6 ist ebenso wie das Außengewinde 3 des Gehäuses 1 als flaches Trapezgewinde ausgeführt. Detail C ist vergrößert dargestellt um zu zeigen, dass der Versteifungsring 22 des Spannelements 5 über eine Staubdichtung 23 verfügt, die mit der Dichtschulter 21 des Gehäuses 1 zusammenwirkt.

Durch die Staubdichtung 23 und die Schmutz- oder Staubdichtung 27 wird erreicht, dass der Innenraum des Anschlussteils vor äußeren Umwelteinflüssen geschützt ist.

Alternativ kann, wie in Fig. 3d gezeigt, die Staubdichtung 23 auch in einer umfangsseitigen Ausnehmung an der Dichtschulter 21 des Gehäuses 1 vorgesehen sein. In diesem Fall greift der Versteifungsring 22 des Spannelements 5 über die Dichtschulter 21 und sorgt damit für eine Abdichtung des Innenraums des Anschlussteils.

Am äußeren Umfang des Spannelements 5 kann eine Gripfläche in Form hervorstehender Rippen zur Erleichterung der Handbetätigung vorgesehen sein. Ebenso kann ein Gripring zur Betätigung mit Rohrzangen vorgesehen sein. Darüber hinaus kann auch eine Positionsanzeige am äußeren Umfang des Spannelements 5 im Bereich des Innengewindes 6 vorgesehen sein.

Die Staubdichtung 27 kann auch als Schmutzdichtung ausgeführt sein und zur Markierung des geeigneten Mediums unterschiedliche Farben annehmen, beispielsweise kann vorgesehen sein, dass diese Dichtung zur Markierung von Gas oder Trinkwasser in gelber oder blauer Farbe ausgeführt ist. Gleiches gilt für die Staubdichtung 23, welche ebenfalls von außen im montiertem Zustand sichtbar ist.

Fig. 3e und Fig. 3f zeigen ein Detail einer alternativen Ausführungsform des Anschlussteils. In dieser Ausführungsform ist am äußeren Umfang des Gehäuses 1 ein Stift 33 und am inneren Umfang des Spannelements 5 eine korrespondierende Vertiefung 34 vorgesehen, sodass beim Verschrauben des Spannelements 5 der Stift 33 in die Vertiefung 34 einrastet. Auf diese Weise wird bei der Montage des Anschlussteils die korrekte Position des Spannelements 5 indiziert. Es kann vorgesehen sein, dass der Stift im Auslieferungszustand bereits eingerastet ist, wenn das Anschlussteil als Steckfitting eingesetzt werden soll.

Der Stift 33 und die Vertiefung 34 sind derart ausgeführt, dass beim Aufschrauben des Spannelements 5 vom Gehäuse 1 der Stift 33 wegbricht und somit anzeigt, dass das Fitting schon einmal demontiert wurde.

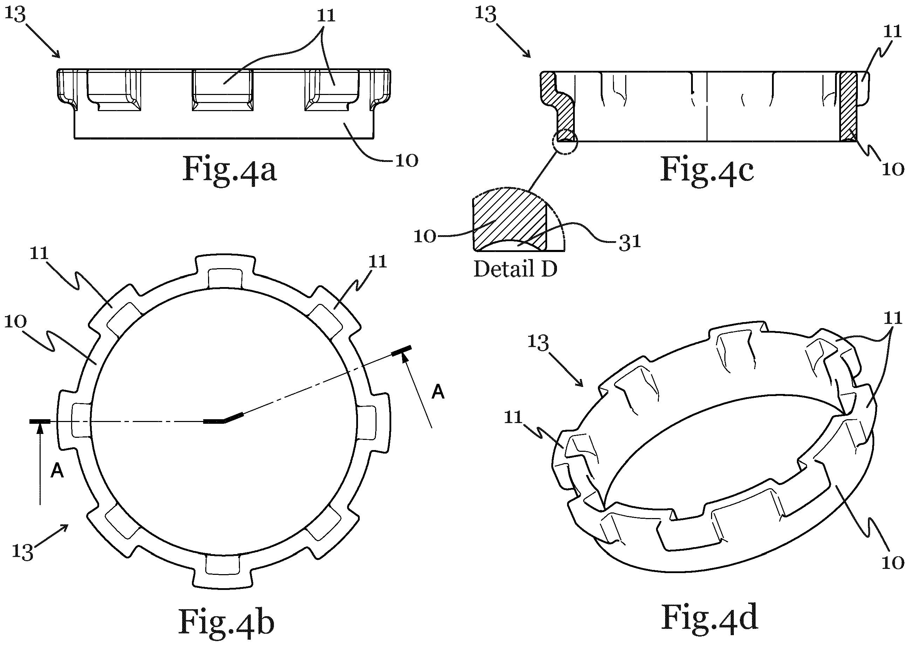

Fig. 4a bis 4d zeigen schematische Darstellungen einer erfindungsgemäßen Druckhülse 13. Diese ist ringförmig mit einem Trägerring 10 und Druckbacken 11. In Fig. 4c ist ein Schnitt entlang der Linie A-A aus Fig. 4b dargestellt, und es ist auch gezeigt, dass der Trägerring 10 an seinem unteren Umfang eine Rundnut 31 zur Aufnahme der Pressdichtung 32 aufweist. Die Druckbacken 11 sind am gegenüberliegenden Umfang angeordnet. Sie dienen dazu, die Druckhülse in das Gehäuse 1 korrekt einzusetzen und bieten eine Druckfläche für die Anschlagfläche 12 des Spannelements 5. Die Druckbacken 11 stellen weiters sicher, dass die Druckhülse 13 nicht in ihrer Position verschoben wird.

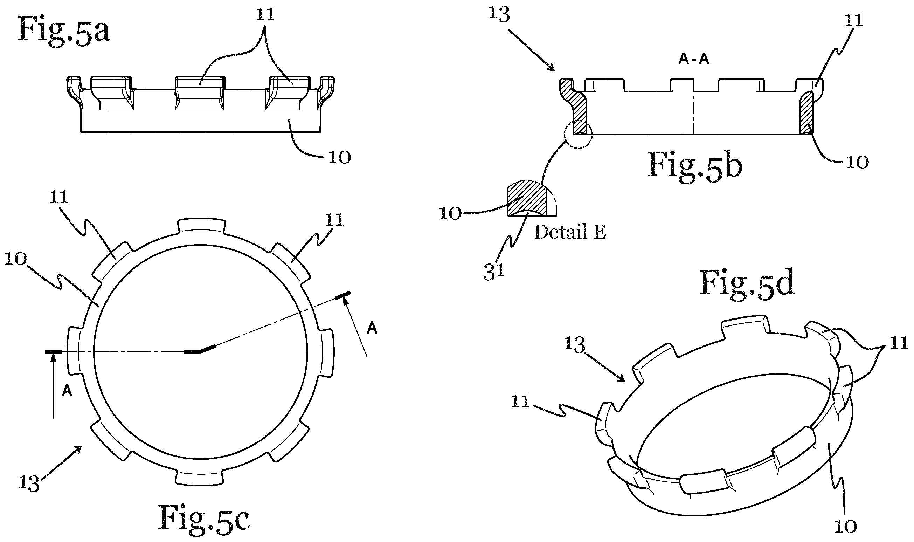

Fig. 5a bis 5d zeigen schematische Darstellungen einer weiteren Ausführungsform einer erfindungsgemäßen Druckhülse 13. Diese ist ringförmig mit einem Trägerring 10 und Druckbacken 11. Im Gegensatz zur Ausführungsform der Fig. 4a - 4d sind die Druckbacken 11 nicht bündig mit dem Trägerring 10 angeordnet, sondern ragen in axialer Richtung der Druckhülse 13 über den Trägerring 10 hinaus. In Fig. 5c ist ein Schnitt entlang der Linie A-A aus Fig. 5b dargestellt. Im Vergleich zur Ausführung der Druckhülse 13 aus Fig. 4a - 4d ergibt sich eine Materialersparnis, da der Trägerring 10 im Bereich zwischen den Druckbacken 11 ausgespart wird.

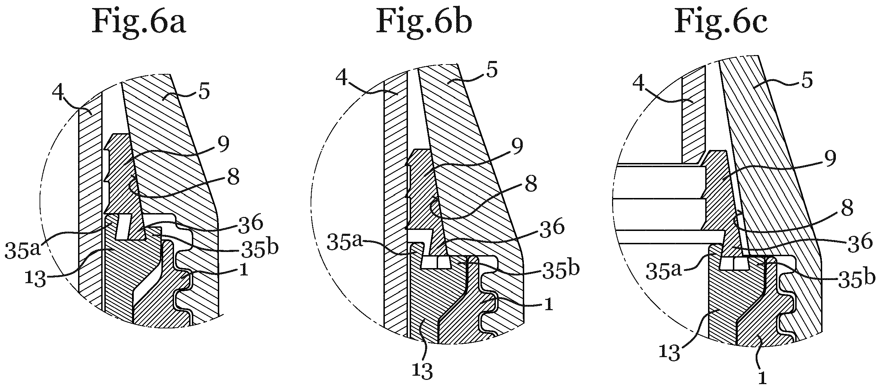

Fig. 6a und 6b zeigen einen schematischen Querschnitt durch eine weitere Ausführungsform der Erfindung. In dieser Ausführungsform ist die Zugsicherung 9 als unterbrochener, zusammendrückbarer Ring mit konischer Außenfläche ausgeführt, dessen Innendurchmesser größer ist als der Innendurchmesser des Spannelements 5. Dadurch kann das Rohr 4 in das Anschlussteil ohne Widerstand eingeführt werden und das Anschlussteil wird durch Aufschrauben des Spannelements 5 fixiert. Das Anschlussteil wirkt in diesem Fall als Aktivierungsfitting. Die Zugsicherung 9 wird als A-Klemme bezeichnet und von der Druckhülse 13 bei Auslieferung und Beginn der Montage in ihrer Position fixiert.

Zu diesem Zweck hat die Druckhülse 13 die Fortsätze 35a und 35b, welche eine Aussparung bilden, in die sich die Zugsicherung 9 über einen Funktionssteg 36 abstützt, wie in Fig. 6a dargestellt ist.

Bei Aktivierung des Fittings durch Aufschrauben des Spannelements 5 wird die Druckhülse 13 nach unten geschoben und gibt die Zugsicherung 9 frei. Die Zugsicherung 9 wird gleichzeitig durch die konische Betätigungsfläche 8 des Spannelements 5 zusammengedrückt, sodass sich ihr Innendurchmesser reduziert, und greift am äußeren Umfang des Rohres 4 an um dieses in seiner Position zu fixieren, wie in Fig. 6b dargestellt ist.

Fig. 6c zeigt einen schematischen Querschnitt durch eine weitere Ausführungsform der Erfindung. In dieser Ausführungsform ist die Zugsicherung 9 als a unterbrochener, auseinanderdrückbarer Ring mit konischer Außenfläche ausgeführt, dessen Innendurchmesser kleiner ist als der Innendurchmesser des Spannelements 5. Dadurch erfährt das Rohr 4 beim Einführen in das Anschlussteil einen Widerstand und drückt die Zugsicherung 9 auseinander. Das Anschlussteil wirkt in diesem Fall als Steckfitting. Die Zugsicherung 9 wird als S-Klemme bezeichnet und von der Druckhülse 13 bei Auslieferung und Beginn der Montage in ihrer Position fixiert. Zu diesem Zweck hat die Druckhülse 13 die Fortsätze 35a und 35b, welche eine Aussparung bilden, in die sich die Zugsicherung 9 über einen Funktionssteg 36 abstützt. Gegebenenfalls kann bei der Verwendung des Anschlussteils als Steckfitting eine andere Ausführungsform der Druckhülse verwendet werden, als bei der Verwendung als Aktivierungsfitting.

Die Zugsicherung 9 greift in diesem Ausführungsbeispiel schon beim Einführen des Rohres 4 an dessen Außenumfang an, wobei die Zugsicherung 9 durch das Rohr auseinandergedrückt, also gedehnt, wird. Durch diese Einführbewegung des Rohres wird die Zugsicherung 9 vom Fortsatz 35b gehoben und freigegeben.

Die Bauteile des Anschlussteils sind modular ausgeführt, sodass die genannten Ausführungsformen der Zugsicherung 9 austauschbar sind und das Anschlussteil durch Austausch der Zugsicherung 9 entweder als Steckfitting, oder als Aktivierungsfitting verwendet werden kann.

Das Gehäuse 1 und das Spannelement 5 können aus unterschiedlichem Material gefertigt sein. Insbesondere können Gehäuse 1 und Spannelement 5 aus Metall oder Kunststoff gefertigt sein. Die Druckhülse kann ebenfalls aus Metall oder aus Kunststoff gefertigt sein.

Die Erfindung beschränkt sich nicht auf die dargestellten Ausführungsbeispiele sondern erstreckt sich auf sämtliche Anschlussteile im Rahmen der nachfolgenden Patentansprüche sowie auf Rohrleitungen mit derartigen Anschlussteilen. Insbesondere ist die Erfindung nicht auf die Verwendung des Anschlussteils als Fitting zwischen zwei Rohrleitungen beschränkt, sondern umfasst auch T-Stücke, Armaturen, Bögen und weitere übliche Fittingformen, sowie andere Zubehörteile.

### Bezugszeichenliste

- 1: Gehäuse
- 2: Einschuböffnung
- 3: Außengewinde
- 4: Rohr
- 5: Spannelement
- 6: Innengewinde
- 7: Aktivierungsmarkierungen
- 8: Betätigungsfläche
- 9: Zugsicherung
- 10: Trägerring
- 11: Druckbacken
- 12: Anschlagfläche
- 13: Druckhülse
- 14: Rohranschlag
- 15: Sollbruchstelle
- 16: Dichtkammer
- 17: Klicklasche
- 18: Arretierungstasche
- 19: Versteifungsrippe
- 20: Positioniertasche
- 21: Dichtschulter
- 22: Versteifungsring
- 23: Staubdichtung
- 24: Klemmraum
- 25: Anschlag
- 26: Durchlassöffnung
- 27: Staubdichtung
- 28: Dichtanschlag
- 29: Markierung
- 30: Winkel
- 31: Rundnut
- 32: Pressdichtung
- 33: Stift
- 34: Vertiefung
- 35a: Erster Fortsatz
- 35b: Zweiter Fortsatz
- 36: Funktionssteg

## Patentansprüche

1. Anschlussteil für eine Rohrleitung, umfassend
a) ein Gehäuse (1) mit zumindest einer Einschuböffnung (2) zum Einführen zumindest eines Rohres (4) und
b) zumindest ein Spannelement (5), vorzugsweise eine Spannmutter, wobei im Spannelement zur Fixierung des Rohres (4) in der Einschuböffnung (2) eine mit einer konischen Betätigungsfläche (8) des Spannelements zusammenwirkende Zugsicherung (9) vorgesehen ist, wobei
c) im Gehäuse (1) zur Abdichtung des Anschlussteils eine ringförmige, mit einem Trägerring (10) und Druckbacken (11) versehene und mit einer vorzugsweise umlaufenden oder umlaufend segmentierten Anschlagfläche (12) des Spannelements zusammenwirkende Druckhülse (13) vorgesehen ist, und
d) die konische Betätigungsfläche (8) von der Anschlagfläche (12) getrennt ausgeführt ist, sodass die Zugsicherung (9) und die Druckhülse (13) unabhängig voneinander betätigbar sind, wobei das Gehäuse (1) eine Dichtkammer (16) zur Aufnahme der Druckhülse (13) umfasst, wobei die Dichtkammer (16) einen gegenüber der Einschuböffnung (2) erweiterten Durchmesser aufweist und einen Dichtanschlag (28) umfasst, sodass die Druckhülse (13) zwischen der Anschlagfläche (12) des Spannelements (5) und dem Dichtanschlag (28) einspannbar ist, **dadurch gekennzeichnet dass** im Bereich der Dichtkammer (16) am inneren Umfang des Gehäuses (1) Versteifungsrippen (19) und Positioniertaschen (20) vorgesehen sind, die einerseits mit den Druckbacken (11) der Druckhülse (13) derart zusammenwirken, dass eine korrekte Positionierung der Druckhülse (13) in der Dichtkammer (16) erreicht wird, andererseits einen Anschlag für die Zugsicherung (9) bilden sowie als Drehmomentaufnahme für zusätzliche Bauteile dienen.

2. Anschlussteil nach Anspruch 1, **dadurch gekennzeichnet, dass** zwischen der Druckhülse (13) und dem Dichtanschlag (28) eine, vorzugsweise in einer Rundnut (31) der Druckhülse (13) angeordnete Pressdichtung (32) angeordnet ist.

3. Anschlussteil nach Anspruch 1 oder 2, **dadurch gekennzeichnet, dass** am inneren Umfang der Einschuböffnung (2) des Gehäuses (1) zumindest ein, vorzugsweise mit einer Sollbruchstelle (15) versehener, mit dem Gehäuse (1) fix verbundener oder separater Rohranschlag (14) vorgesehen ist, wobei die Position des Rohranschlags (14) vorzugsweise am äußeren Umfang des Gehäuses (1) durch Markierungen (29) angedeutet ist.

4. Anschlussteil nach einem der Ansprüche 1 bis 3, **dadurch gekennzeichnet, dass** das Gehäuse (1) mit einem Außengewinde (3), vorzugsweise als mehrgängiges Trapezgewinde mit flacher Flanke, und das Spannelement (5) als Spannmutter mit einem korrespondierenden Innengewinde (6), vorzugsweise in Form von Schraub- oder Bajonettgewinden, ausgeführt ist.

5. Anschlussteil nach einem der Ansprüche 1 bis 4, **dadurch gekennzeichnet, dass** am äußeren Umfang des Gehäuses (1) Klicklaschen (17) vorgesehen sind, die mit Arretierungstaschen (18) am inneren Umfang des Spannelements (5) zusammenwirken.

6. Anschlussteil nach einem der Ansprüche 1 bis 5, **dadurch gekennzeichnet, dass** am äußeren Umfang des Gehäuses (1) eine zumindest im Wesentlichen umlaufende, vorstehende Dichtschulter (21) vorgesehen ist, die mit einem äußeren Versteifungsring (22) des Spannelements (5) derart zusammenwirkt, dass im montierten Zustand der Bereich zwischen Gehäuse (1) und Spannelement (5) abgedichtet ist, wobei vorzugsweise zwischen der Dichtschulter (21) und dem Versteifungsring (22) eine Staubdichtung (23) angeordnet ist.

7. Anschlussteil nach einem der Ansprüche 4 bis 6, **dadurch gekennzeichnet, dass** die Anschlagfläche (12) des Spannelements (5) anschließend an das oder beabstandet vom Innengewinde (6) vorgesehen ist, und die konisch verlaufende Betätigungsfläche (8) anschließend an die oder beabstandet von der Anschlagfläche (12) vorgesehen ist, wobei die Anschlagfläche (12) und die Betätigungsfläche (8) zueinander einen Winkel (30) größer als 90°, vorzugsweise 95° bis 110°, besonders bevorzugt 100° einnehmen, und wobei im Inneren des Spannelements (5) ein sich konisch erweiternder, durch die Betätigungsflächen (8) begrenzter Klemmraum (24) zur Aufnahme der Zugsicherung (9) vorgesehen ist.

8. Anschlussteil nach einem der Ansprüche 1 bis 7, **dadurch gekennzeichnet, dass** anschließend an die Betätigungsfläche (8) ein Anschlag (25) vorgesehen ist, der mit der Zugsicherung (9) zusammenwirkt, sodass ein Austreten der Zugsicherung (9) bei Betätigung des Spannelements (5) verhindert wird, wobei der Anschlag vorzugsweise die maximale Eindringtiefe der Zugsicherung (9) definiert.

9. Anschlussteil nach einem der Ansprüche 1 bis 8, **dadurch gekennzeichnet, dass** die Zugsicherung (9) als zusammendrückbarer, vorzugsweise unterbrochener Ring mit zumindest partiell konischer Außenfläche ausgeführt ist, dessen Innendurchmesser größer ist als der Innendurchmesser des Spannelements (5).

10. Anschlussteil nach einem der Ansprüche 1 bis 9, **dadurch gekennzeichnet, dass** die Zugsicherung (9) als auseinanderdrückbarer, vorzugsweise unterbrochener Ring mit zumindest partiell konischer Außenfläche ausgeführt ist, dessen Innendurchmesser kleiner ist als der Innendurchmesser des Spannelements (5).

11. Anschlussteil nach einem der Ansprüche 1 bis 10, **dadurch gekennzeichnet, dass** am äußeren Umfang des Gehäuses (1) ein Stift (33) und am Spannelement (5) eine Vertiefung (34) vorgesehen ist, sodass beim Verschrauben des Spannelements (5) der Stift (33) in die Vertiefung (34) einrastet, sodass die korrekte Position des Spannelements (5) indiziert wird.

12. Anschlussteil nach Anspruch 11, **dadurch gekennzeichnet, dass** der Stift (33) und die Vertiefung (34) derart ausgeführt sind, dass beim Aufschrauben des Spannelements (5) der Stift abgebrochen wird, sodass angezeigt wird, ob das Anschlussteil schon einmal demontiert wurde.

13. Rohrleitung mit einem Anschlussteil nach einem der vorhergehenden Ansprüche.

## Claims

1. Connection piece for a pipeline, comprising
(a) a housing (1) with at least one insertion opening (2) to introduce at least one pipe (4) and
(b) at least one clamping element (5), preferably a clamping nut, wherein a pull protector (9) interacting with a conical actuation surface (8) of the clamping element is provided in the clamping element for the fixation of the pipe (4) in the insertion opening (2), wherein,
(c) in the housing (1), for the sealing of the connection piece, a ring-shaped pressure sleeve (13) is provided with a carrier ring (10) and pressure jaws (11) and interacts with a preferably circumferential or circumferentially segmented stop surface (12) of the clamping element, and
(d) the conical actuating surface (8) is designed to be separated from the stop surface (12) so that the pull protector (9) and the pressure sleeve (13) can be actuated independently of each other,
wherein
the housing (1) comprises a sealing chamber (16) to receive the pressure sleeve (13), wherein the sealing chamber (16) has an expanded diameter with relation to the insertion opening (2) and comprises a sealing abutment (28), so that the pressure sleeve (13) can be clamped between the stop surface (12) of the clamping element (5) and the stop abutment (28), **characterized in that**, in the area of the sealing chamber (16) on the inner circumference of the housing (1), reinforcement ribs (19) and positioning recesses (20) are provided, which, on the one hand, interact with the pressure jaws (11) of the pressure sleeve (13) in such a way that a correct position of the pressure sleeve (13) is achieved within the pressure chamber (16), and which, on the other hand, form an end-stop for the pull protector (9), and serve as torque absorbers for additional components.

2. Connection piece according to Claim 1, **characterized in that** a gasket seal (32), which is preferably arranged in a rounded groove (31) of the pressure sleeve (13), is arranged between the pressure sleeve (13) and the sealing abutment (28).

3. Connection piece according to Claim 1 or 2, **characterized in that**, at least one tube stop (14), which is preferably provided with a predetermined breaking point (15) and is either permanently connected to the housing (1) or separate, is provided on the inner circumference of the insertion opening (2) of the housing (1), wherein the position of the tube stop (14) is preferably indicated on the outer circumference of the housing (1) by the markings (29).

4. Connection piece according to one of the Claims 1 to 3, **characterized in that** the housing (1) is designed with an outer thread (3), preferably as a multi-start trapezoidal thread with a flat flank, and the clamping element (5) is designed as a clamping nut with a corresponding inner thread (6), preferably in the form of screw threads or bayonet threads.

5. Connection piece according to one of the Claims 1 to 4, **characterized in that** click flaps (17) are provided on the outer circumference of the housing (1), which interact with locking recesses (18) on the inner circumference of the clamping element (5).

6. Connection piece according to one of the Claims 1 to 5, **characterized in that**, on the outer circumference of the housing (1), a protruding sealing shoulder (21) is provided, which is at least substantially circumferential and interacts with an outer reinforcement ring (22) of the clamping element (5) in such a way that, in the mounted state, the area between the housing (1) and the clamping element (5) is sealed, wherein a dust seal (23) is preferably provided between the sealing shoulder (21) and the reinforcement ring (22).

7. Connection piece according to one of the Claims 4 to 6, **characterized in that** the stop surface (12) of the clamping element (5) is provided in contact with or spaced apart from the inner thread (6), and the conically running actuating surface (8) is provided in contact with or spaced apart from the stop surface (12), wherein the stop surface (12) and the actuating surface (8) are at an angle (30) to each other greater than 90°, preferably 95° to 110°, being particularly preferred, 100°, and wherein a conically expanding clamping space (24) limited by the actuating surfaces (8) is provided in the interior space of the clamping element (5) to receive the pull protector (9).

8. Connection piece according to one of the Claims 1 to 7, **characterized in that** an end-stop (25) is provided in contact with the actuating surface (8), which interacts with the pull protector (9) so that the pull protector (9) is prevented from falling out when the clamping element (5) is actuated, wherein the end-stop preferably defines the maximum penetration depth of the pull protector (9).

9. Connection piece according to one of the Claims 1 to 8, **characterized in that** the pull protector (9) is designed as a ring that can be pressed together, is preferably broken off and has an at least partially conical outer surface, the inner diameter of which is larger than the inner diameter of the clamping element (5) .

10. Connection piece according to one of the Claims 1 to 9, **characterized in that** the pull protector (9) is designed as a ring that can be spread apart, is preferably broken off and has an at least partially conical outer surface, the inner diameter of which is smaller than the inner diameter of the clamping element (5).

11. Connection piece according to one of the Claims 1 to 10, **characterized in that** a pin (33) is provided on the outer circumference of the housing (1) and a depression (34) is provided on the clamping element (5) so that, when fastening the clamping element (5), the pin (33) snaps into the depression (34) so that the correct position of the clamping element (5) is indicated.

12. Connection piece according to Claim 11, **characterized in that** the pin (33) and the depression (34) are designed in such a way that when fastening the clamping element (5), the pin is broken off so that it is indicated if the connection piece has already been demounted before.

13. Pipeline with a connection piece according to any one of the preceding claims.

## Revendications

1. Pièce de raccordement pour une tuyauterie, comprenant
a) un boîtier (1) doté d'au moins un orifice d'insertion (2) destiné à introduire au moins un tube (4) et
b) au moins un élément de serrage (5), de préférence un écrou de serrage, dans l'élément de serrage, pour la fixation du tube (4) dans l'orifice d'insertion (2) étant prévue une sécurité anti-traction (9) coopérant avec une surface de manoeuvre conique (8) de l'élément de serrage,
c) dans le boîtier (1), pour assurer l'étanchéité de la pièce de raccordement étant prévue une douille de pression (13) de forme annulaire, munie d'une bague porteuse (10) et de mâchoires de pression (11) et coopérant avec une surface de butée (12) de préférence périphérique ou segmentée sur la périphérie de l'élément de serrage et
d) la surface de manoeuvre conique (8) étant réalisée séparément de la surface de butée (12), de telle sorte que la sécurité anti-traction (9) et la douille de pression (13) soient manoeuvrables indépendamment l'une de l'autre,
le boîtier (1) comprenant une chambre d'étanchéité (16) destinée à recevoir la douille de pression (13), la chambre d'étanchéité (16) présentant un diamètre élargi au regard de l'orifice d'insertion (2) et comprenant une butée d'étanchéité (28), de sorte que la douille de pression (13) soit enserrable entre la surface de butée (12) de l'élément de serrage (5) et la butée d'étanchéité (28), **caractérisée en ce que** dans la région de la chambre d'étanchéité (16), sur le périmètre intérieur du boîtier (1) sont prévues des nervures de renfort (19) et des poches de positionnement (20), qui d'une part, coopèrent avec les mâchoires de pression (11) de la douille de pression (13) de telle sorte qu'un positionnement correct de la douille de pression (13) dans la chambre d'étanchéité (16) soit obtenue, d'autre part forment une butée pour la sécurité anti-traction (9) et servent également d'absorbeur de couple de rotation pour des composants supplémentaires.

2. Pièce de raccordement selon la revendication 1, **caractérisée en ce qu'**entre la douille de pression (13) et la butée d'étanchéité (28) est placé un joint de compression (32), placé de préférence dans une rainure annulaire (31) de la douille de pression (13).

3. Pièce de raccordement selon la revendication 1 ou 2, **caractérisée en ce que** sur le périmètre intérieur de l'orifice d'insertion (2) du boîtier (1) est prévue au moins une butée de tube (14), munie de préférence d'une zone de rupture théorique (15), fixement reliée avec le boîtier (1) ou séparée, la position de la butée de tube (14) étant esquissée par des marquages (29), de préférence sur la périphérie extérieure du boîtier (1).

4. Pièce de raccordement selon l'une quelconque des revendications 1 à 3, **caractérisée en ce que** le boîtier (1) est réalisé avec un filetage extérieur (3), de préférence sous la forme d'un filetage trapézoïdal à filet multiple, à flanc plat et l'élément de serrage (5) est réalisé sous la forme d'un écrou de serrage avec un taraudage (6) correspondant, de préférence sous la forme de taraudage à visser ou à baïonnette.

5. Pièce de raccordement selon l'une quelconque des revendications 1 à 4, **caractérisée en ce que** sur la périphérie extérieure du boîtier (1) sont prévues des pattes à clipser (17) qui coopèrent avec des poches de blocage (18) sur le périmètre intérieur de l'élément de serrage (5).

6. Pièce de raccordement selon l'une quelconque des revendications 1 à 5, **caractérisée en ce que** sur la périphérie extérieure du boîtier (1) est prévu un épaulement d'étanchéité (21) débordant, au moins essentiellement périphérique, qui coopère avec une bague de renfort (22) extérieure de l'élément de serrage (5) de telle sorte, qu'en position montée, la région entre le boîtier (1) et l'élément de serrage (5) soit étanchéifiée, sachant que de préférence entre l'épaulement d'étanchéité (21) et la bague de renfort (22) est placé un joint antipoussière (23).

7. Pièce de raccordement selon l'une quelconque des revendications 4 à 6, **caractérisée en ce que** la surface de butée (12) de l'élément de serrage (5) est placée à la suite du taraudage (6) ou à distance de celui-ci, et la surface de manoeuvre (8) s'écoulant sous forme conique est prévue à la suite de la surface de butée (12) ou à distance de celle-ci, la surface de butée (12) et la surface de manoeuvre (8) adoptant entre elles un angle (30) supérieur à 90°, de préférence de 95° à 110°, de manière particulièrement préférentielle de 100°, et à l'intérieur de l'élément de serrage (5) étant prévu un espace de serrage (24) s'élargissant de manière conique, délimité par les surfaces de manoeuvre (8), destiné à recevoir la sécurité anti-traction (9).

8. Pièce de raccordement selon l'une quelconque des revendications 1 à 7, **caractérisée en ce qu'**à la suite de la surface de manoeuvre (8) est prévue une butée (25) qui coopère avec la sécurité anti-traction (9), de sorte à empêcher que la sécurité anti-traction (9) ne s'échappe lors de la manoeuvre de l'élément de serrage (5), la butée définissant de préférence la profondeur de pénétration maximale de la sécurité anti-traction (9).

9. Pièce de raccordement selon l'une quelconque des revendications 1 à 8, **caractérisée en ce que** la sécurité anti-traction (9) est conçue sous la forme d'une bague compressible, de préférence interrompue avec une surface extérieure au moins partiellement conique, dont le diamètre intérieur est supérieur au diamètre intérieur de l'élément de serrage (5).

10. Pièce de raccordement selon l'une quelconque des revendications 1 à 9, **caractérisée en ce que** la sécurité anti-traction (9) est conçue sous la forme d'une bague écartable par pression, de préférence interrompue avec une surface extérieure au moins partiellement conique, dont le diamètre intérieur est supérieur au diamètre intérieur de l'élément de serrage (5).

11. Pièce de raccordement selon l'une quelconque des revendications 1 à 10, **caractérisée en ce que** sur la périphérie extérieure du boîtier (1) est prévu une broche (33) et sur l'élément de serrage (5) est prévu une cavité (34), de manière à ce que lors du vissage de l'élément de serrage (5), la broche (33) s'enclenche dans la cavité (34), de telle sorte que la position correcte de l'élément de serrage (5) soit induite.

12. Pièce de raccordement selon la revendication 11, **caractérisée en ce que** la broche (33) et la cavité (34) sont réalisés de telle sorte que lors du vissage de l'élément de serrage (5), la broche se casse, pour qu'il soit indiqué si la pièce de raccordement a déjà été démontée une fois.

13. Tuyauterie, munie d'une pièce de raccordement selon l'une quelconque des revendications précédentes.
